# EUROPÄISCHE PATENTSCHRIFT

(11) **EP 2 456 052 B1**
(45) Veröffentlichungstag und Bekanntmachung des Hinweises auf die Patenterteilung: **24.09.2014**
(21) Anmeldenummer: 11189715.3
(22) Anmeldetag: 18.11.2011
(51) Int. Cl.: H02K 5/22, H02K 17/30, H02K 11/00

(54) **Motoranschlusskasten und Drehstrommotor**
AC electric motor connection box
Boîtier de connection d'un moteur électrique à courant alternatif

(30) Priorität: 18.11.2010 DE 102010044143
(43) Veröffentlichungstag der Anmeldung: 23.05.2012
(73) Patentinhaber: LQ Mechatronik-Systeme GmbH, 71691 Freiberg am Neckar (DE)
(72) Erfinder: Quero, José, 74321 Bietigheim-Bissingen (DE); Lentmaier, Steffen, 71723 Großbottwar (DE); Wenzel, Mike, 74076 Heilbronn (DE)
(74) Vertreter: Patentanwälte Ruff, Wilhelm, Beier, Dauster & Partner

(56) Entgegenhaltungen:
- EP-A2- 1 104 080
- DE-A1- 2 012 246
- DE-A1- 3 803 164
- DE-C- 845 077

## Beschreibung

Die Erfindung betrifft einen Motoranschlusskasten für einen Drehstrommotor mit einem Gehäuse, in dem elektrische Motoranschlusskontakte sowie mit einer Stromversorgungsquelle verbindbare Stromversorgungsanschlüsse vorgesehen sind, sowie mit elektrischen Kontaktierungsmitteln, um die Stromversorgungsanschlüsse mit den elektrischen Motoranschlusskontakten nach vorgegebenen Leistungsfunktionen zu verbinden, und mit einem auf das Gehäuse aufsetzbaren Deckel, sowie einen Drehstrommotor mit einem derartigen Motoranschlusskasten.

Ein derartiger Motoranschlusskasten ist für einen Drehstrommotor allgemein bekannt. Als elektrische Kontaktierungsmittel sind Drahtverbindungen vorgesehen, die mit den Motoranschlusskontakten und den Stromversorgungsanschlüssen in gewünschter Leistungsfunktion verlötet oder über Klemmen verbunden sind.

Aus der EP 1 895 642 A2 ist auch ein Motoranschlusskasten für einen Drehstrommotor bekannt, der ein Gehäuse und einen Deckel umfasst. In dem Deckel ist eine elektronische Schaltung zum elektrischen Beeinflussen des jeweiligen Drehstrommotors integriert. Um unterschiedliche Leistungsfunktionen zu ermöglichen, sind unterschiedliche Deckel mit verschiedenen elektronischen Funktionen vorgesehen, die je nach Einsatzzweck auf das Gehäuse aufsetzbar und austauschbar sind. Die unterschiedlichen Deckel nutzen dieselbe elektrische oder mechanische Schnittstelle zum Unterteil, d.h. zum Gehäuse, um mit der im Gehäuse untergebrachten Elektrik zu kommunizieren.

Aufgabe der Erfindung ist es, einen Motoranschlusskasten und einen Drehstrommotor der eingangs genannten Art zu schaffen, die eine verbesserte Variabilität aufweisen.

Für den Motoranschlusskasten wird diese Aufgabe dadurch gelöst, dass der Deckel in unterschiedlichen Ausrichtungen auf das Gehäuse aufsetzbar ist, und dass in dem Deckel die elektrischen Kontaktierungsmittel in wenigstens zwei festgelegten Kontaktierungsanordnungen für wenigstens zwei unterschiedliche Leistungsfunktionen integriert sind, die unterschiedlichen Ausrichtungen des Deckels derart alternativ zugeordnet sind, dass durch Aufsetzen des Deckels jeweils eine der Leistungsfunktionen geschaltet ist. Die wenigstens zwei unterschiedlichen Kontaktierungsanordnungen in dem Deckel weisen demzufolge zum Gehäuse gewandte Kontaktierungsstellen auf, die mit den Stromversorgungsanschlüssen und den Motoranschlusskontakten beim Aufsetzen des Deckels in elektrische Wirkverbindung gelangen. Die Kontaktierungsanordnungen im Deckel bilden somit die geeigneten Brücken oder anders gestaltete elektrische Verbindungen, um jeweils eine von wenigstens zwei unterschiedlichen Leistungsfunktionen beim Aufsetzen des Deckels zu schalten. Die Kontaktierungsanordnungen bilden fehlende Leitungsabschnitte für entsprechend elektrische Schaltungen zur Erzielung jeweis einer definierten Leistungsfunktion. Typische Leistungsfunktionen sind das Betreiben des Drehstrommotors in einer Sternschaltung oder einer Dreiecksschaltung. Im besonders bevorzugter Weise ist der Drehstrommotor ein Asynchronmotor. Durch das Aufsetzen des Deckels wird jeweils lediglich eine einzelne Schaltung und demzufolge eine einzelne Leistungsfunktion für die Ansteuerung des Drehstrommotors komplettiert. Je nachdem, in welcher Ausrichtung, d.h. in welcher Stellung relativ zum Gehäuse der Deckel aufgesetzt wird, ist jeweils eine andere Schaltung und Leistungsfunktion erzielbar. Durch die erfindungsgemäße Lösung ist es insbesondere möglich, mittels eines einfachen Umsetzens des Deckels den Drehstrommotor mit einer Dreieckschaltung oder mit einer Sternschaltung zu betreiben. Durch die erfindungsgemäße Lösung kann der Drehstrommotor in wenigstens zwei unterschiedlichen Leistungsvarianten betrieben werden, ohne dass zusätzliche Bauteile oder Komponenten benötigt werden, die mit bestehenden Bauteilen oder Komponenten auszutauschen wären. Efindungsgemäß umfassen die elektrischen Kontaktierungsmittel Steck- oder Flächenkontaktierungen, um die elektrische Verbindung zu den gehäuseseitigen elektrischen Kontaktstellen herzustellen.

In Ausgestaltung der Erfindung sind am Deckel und am Gehäuse mechanische Kodierungsmittel vorgesehen, um ein definiertes Aufsetzen des Deckels auf das Gehäuse abhängig von der geschalteten Leistungsfunktion zu ermöglichen. In weiterer Ausgestaltung sind dem Deckel und/oder dem Gehäuse optisch, haptisch oder akustisch erfassbare Signalisierungsmittel zugeordnet, die abhängig von der gewählten Ausrichtung des Deckels nach dem Aufsetzen des Deckels die geschaltete Leistungsfunktion erkennen lassen. Ein besonders bevorzugtes Ausführungsbeispiel sieht am Gehäuse an zwei zueinander beabstandeten Randabschnitten Symbole für Dreieck- und Sternschaltung vor. Am Deckel ist eine Aussparung vorgesehen, die beim Aufsetzen des Deckels mit jeweils einem der Symbole derart fluchtet, dass das Symbol bei aufgesetztem Deckel erkennbar ist. Die Zuordnung der Kontaktierungsanordnungen innerhalb des Deckels erfolgt derart, dass bei Erkennbarkeit des Symbols der Sternschaltung durch Aufsetzen des Deckels auch die Leistungsfunktion der Sternschaltung geschaltet ist. Bei entsprechend unterschiedlichem Ausrichten des Deckels ist dann das entsprechend andere Symbol durch die Aussparung hindurch erkennbar. Bei einer bevorzugten Ausführungsform der Erfindung sind die unterschiedlichen Kontaktierungsanordnungen um 180° zueinander versetzt, so dass ein Umsetzen des Deckels um 180° die eine oder die andere Leistungsvariante schaltet. Diese Ausgestaltung ist vorteilhaft bei Deckel und Gehäuse mit quadratischer Grundfläche. Auch mehreckige, zu einer Mittelachse spiegelsymmetrische Gestaltungen von Gehäuse und Deckel ermöglichen ein Umsetzen des Deckels in verschiedenen, je nach Anzahl der Ecken vorgegebenen Winkelabschnitten. Schließlich ist es auch möglich, Deckel und Gehäuse mit einer kreisförmigen Aufsetzfläche zu versehen, die ebenfalls die Ausrichtung und das Aufsetzen des Deckels in unterschiedlichen Stellungen ermöglichen.

In weiterer Ausgestaltung der Erfindung sind in dem Deckel weitere elektrische oder elektronische Funktionselemente integriert, die jeweils einer der Leistungsfunktionen zugeordnet sind. Diese elektrischen oder elektronischen Funktionselemente können die Leistungsfunktionen ergänzen oder weitere Zusatzfunktionen generieren. Eine besonders vorteilhafte Ausführungsform ist zur Entstörung vorgesehen. Hierfür kann als elektrisches Funktionselement vorteilhaft wenigstens ein Kondensator eingesetzt sein.

In weiterer Ausgestaltung der Erfindung ist der Deckel ein- oder mehrteilig ausgeführt. Auch bei mehrteiligem Deckel bildet der Deckel in montierter Funktionsposition ein einteilig handhabbares Bauteil.

In weiterer Ausgestaltung der Erfindung ist der Deckel lösbar oder unlösbar auf dem Gehäuse montierbar. Eine lösbare Montage des Deckels auf dem Gehäuse ist vorteilhaft, da dann zu einem späteren Zeitpunkt je nach Bedarf die Leistungscharakteristik bzw. die Leistungsfunktion des Drehstrommotors durch Lösen und Umsetzen des Deckels geändert werden kann.

In weiterer Ausgestaltung der Erfindung ist der Deckel aus mehreren, übereinander angeordneten und fest miteinander verbindbaren Deckellagen aufgebaut, die unterschiedliche Kontaktierungsanordnungen und/oder elektrische oder elektronische Funktionselemente aufweisen. Ein mehrlagiger Aufbau des Deckels ermöglicht unterschiedliche Funktionsebenen für elektrische oder elektronische Funktionen. Allen Varianten ist gemeinsam, dass der Deckel nach dem Zusammensetzen der verschiedenen Deckellagen als einteiliges Bauteil handhabbar und in unterschiedlichen Ausrichtungen auf das Gehäuse aufsetzbar ist, wodurch abhängig von der Ausrichtung des Deckels zum Gehäuse unterschiedliche Kontaktierungen von Stromversorgungsanschlüssen mit Motoranschlusskontakten erzielt werden.

Eine Ausgestaltung des Drehstrommotors, der mit einem derartigen Motoranschlusskasten versehen ist, sieht vor, dass der Motoranschlusskasten mittels einer Adapterplatte auf einem Motorgehäuse befestigt ist. Dadurch wird unabhängig von der Dimensionierung des Motoranschlusskastens immer eine Befestigung an der motorgehäuseseitigen Befestigungsstelle ermöglicht.

Weiter Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in einer Explosionsdarstellung schematisch eine Ausführungsform eines erfindungsgemäßen Drehstrommotors mit einer Ausführungsform eines erfindungsgemäßen Motoranschlusskastens,
- Fig. 2: in perspektivischer Explosionsdarstellung den Motoranschlusskasten nach Fig. 1,
- Fig. 3: in weiterer perspektivischer Explosionsdarstellung den Motoranschlusskasten nach Fig. 2,
- Fig. 4: schematisch eine Draufsicht auf ein Gehäuse des Motoranschlusskastens nach den Fig. 2 und 3,
- Fig. 5: eine Ansicht einer Unterseite eines Deckels des Motoranschlusskastens nach den Fig. 2 und 3 und
- Fig. 6a und 6b: Ersatzschaltbilder für unterschiedliche Leistungsfunktionen des Drehstrommotors, die über den Deckel nach Fig. 5 schaltbar sind.

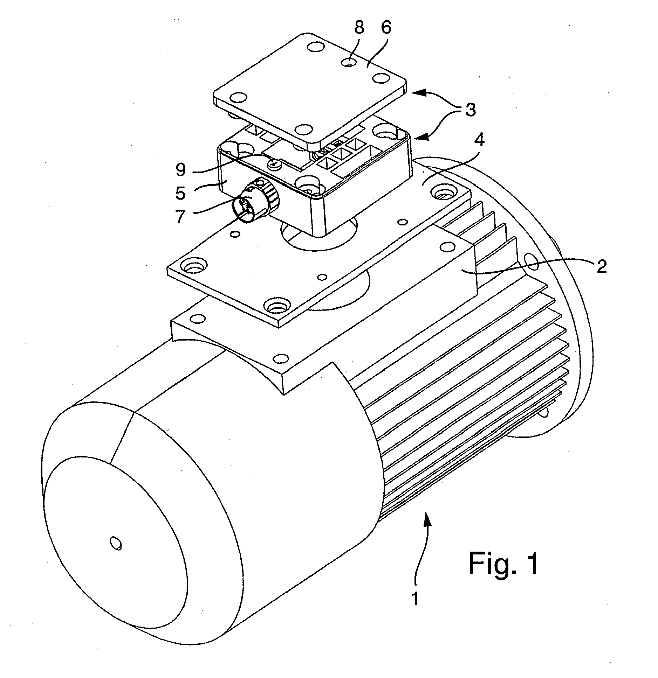

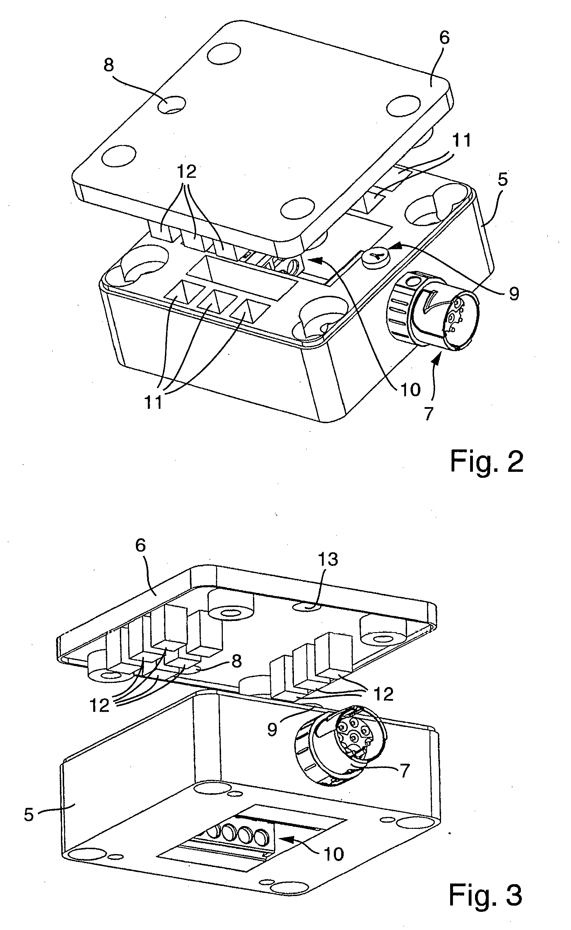

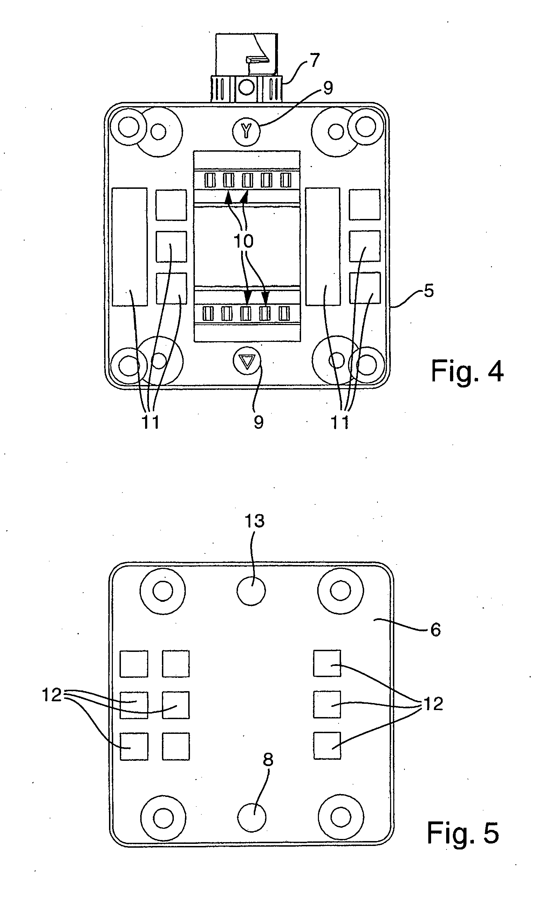

Ein Drehstrommotor 1 nach Fig. 1 stellt einen Asynchronmotor dar. Der Drehstrommotor 1 weist ein Motorgehäuse auf, das mit einem Gehäuseflansch 2 zur Befestigung eines Motoranschlusskastens 3 versehen ist. Der Gehäuseflansch 2 ist einstückiger Teil eines das Motorgehäuse bildenden Gussbauteiles. Der Gehäuseflansch 2 weist eine rechteckige Grundfläche auf, die an ihren Eckbereichen mit insgesamt vier Gewindebohrungen für die Befestigung des Motoranschlusskastens 3 versehen ist. Der Motoranschlusskasten 3 weist beim dargestellten Ausführungsbeispiel gemäß den Fig. 1 bis 5 eine im Wesentlichen quadratische Grundfläche auf und ist mittels einer Adapaterplatte 4 auf dem Gehäuseflansch 2 befestigt. Die Adapterplatte 4 weist eine auf die Grundfläche des Gehäuseflansches 2 abgestimmte, rechteckige Form auf und ist fluchtend zu den Gewindebohrungen des Gehäuseflansches 2 mit vier Durchtritten versehen, durch die Kopfschrauben hindurchtreten und in die Gewindebohrungen des Gehäuseflansches 2 eingeschraubt werden können. Die Adapterplatte 4 ist zudem mit nicht näher bezeichneten Gewindebohrungen in Eckbereichen der quadratischen Grundfläche des Motoranschlusskastens 3 versehen. Der Motoranschlusskasten 3 ist mittels geeigneter Schraubverbindungen auf der Adapterplatte 4 festschraubbar. Die Montage des Motoranschlusskastens 3 auf dem Gehäuseflansch 2 des Drehstrommotors 1 erfolgt dadurch, dass die Adapterplatte 4 auf dem Gehäuseflansch 2 montiert wird und anschließend der Motoranschlusskasten 3 auf die Adapterplatte 4 aufgebracht wird.

Der Motoranschlusskasten 3 weist ein Gehäuse 5, vorzugsweise aus Kunststoff, auf, auf das ein vorzugsweise ebenfalls aus Kunststoff bestehender Deckel 6 aufsetzbar ist. In dem Gehäuse 5 sind Motoranschlusskontakte 10 angeordnet, die mit entsprechenden elektrischen Leitungen des Drehstrommotors 1 im Funktionszustand des Drehstrommotors 1 verbunden sind. Die elektrischen Leitungen umfassen entsprechende Anschlüsse von drei elektromagnetischen Spulen, die in grundsätzlich bekannter Weise in dem Drehstrommotor angeordnet sind.

In dem Gehäuse 5 sind auch Stromversorgungsanschlüsse angeordnet, die im funktionsfähigem Zustand des Drehstrommotors 1 mit einer Stromquelle in Verbindung stehen. Hierzu ist außen am Gehäuse 5 ein Anschlussstrecker 7 vorgesehen, der mit den Stromversorgungsanschlüssen innerhalb des Gehäuses 5 in Verbindung steht und an den ein entsprechendes Stromkabel zur Lieferung des Dreiphasenwechselstromes anschließbar ist.

In dem Deckel 6 sind elektrische Kontaktierungsmittel 12 zur Verbindung der im Gehäuse 5 angeordneten Stromversorgungsanschlüsse mit den Motoranschlusskontakten vorgesehen. Beim dargestellten Ausführungsbeispiel ragen die verschiedenen elektrischen Kontaktierungsmittel 12 von einer Unterseite des Deckels 6 nach unten ab.

Komplementär hierzu sind im Gehäuse 5 passende mechanische und elektrische Steckaufnahmen 11 vorgesehen, in die die elektrischen Kontaktierungsmittel 12 bei einem Aufsetzen des Deckels 6 eintauchen. Die elektrischen Kontaktierungsmittel 12 bilden im Deckel 6 zwei voneinander unabhängige, im Deckel 6 festgelegte Kontaktierungsanordnungen, von denen beim Aufsetzen des Deckels 6 jeweils nur eine einzelne Kontaktierungsanordnung mit den Steckaufnahmen 11 im Gehäuse 5 in Wirkverbindung gerät. Die Steckaufnahmen 11 umfassen die entsprechenden elektrischen Motoranschlusskontakte und Stromversorgungsanschlüsse derart, dass beim Aufsetzen des Deckels 6 die entsprechend festgelegte elektrische Kontaktierungsanordnung gewünschte elektrische Brücken und Leitungsverbindungen zwischen den entsprechenden Stromversorgungsanschlüssen und den Motoranschlusskontakten herstellt. Die beiden voneinander unabhängigen Kontaktierungsanordnungen im Deckel 6 sind derart gestaltet, dass zwei unterschiedliche Leistungsfunktionen für den Drehstrommotor gewährleistet sind. Hierzu ist die eine Kontaktierungsanordnung derart ausgeführt, dass die entsprechenden Stromversorgungsanschlüsse und Motoranschlusskontakte innerhalb des Gehäuses 5 in einer Sternschaltung miteinander kontaktiert werden. Die andere Kontaktierungsanordnung ist derart gestaltet, dass entsprechende Motoranschlusskontakte und Stromversorgungsanschlüsse beim Aufsetzen des Deckels in einer Dreieckschaltung kontaktiert werden. Um die eine oder die andere Kontaktierungsanordnung wirksam mit den entsprechenden Motoranschlusskontakten und den Stromversorgungsanschlüssen zu verbinden, wird der Deckel 6 entweder in einer ersten Ausrichtung oder in einer zweiten, um 180° gegenüber der ersten Ausrichtung in der Deckelebene verdrehten zweiten Ausrichtung auf das Gehäuse 5 aufgesetzt.

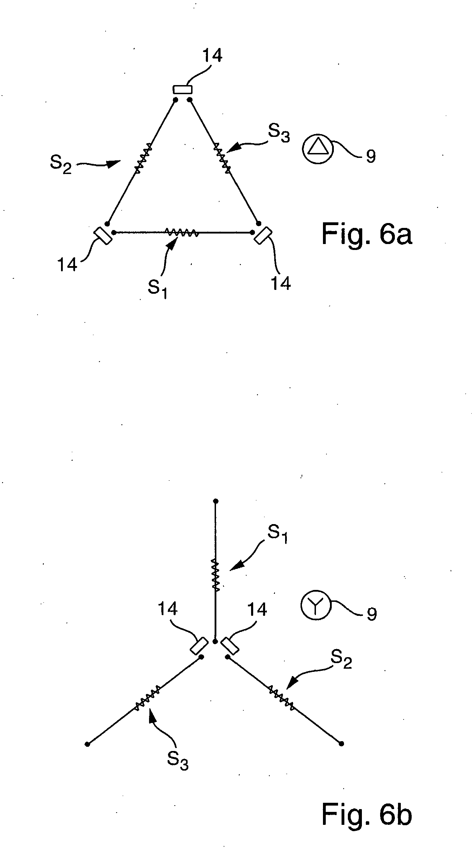

Anhand der Fig. 6a und 6b ist erkennbar, wie die Kontaktierungsanordnungen die drei Phasenstränge der Stromversorgungsanschlüsse den Anschlusskontakten der drei elektromagnetischen Spulen S₁ bis S₃ innerhalb des Drehstrommotors 1 in der Dreieckschaltung bzw. in der Sternschaltung (Fig. 6b) zuordnen. Die Zuordnung der drei Phasenstränge des Wechselstromkabels zu den Anschlusskontakten der elektromagnetischen Spulen S₁ bis S₃ in Dreieckschaltung oder Sternschaltung ist dem Fachmann grundsätzlich bekannt. Entsprechende elektrische Brücken 14 verbinden die Anschlusskontakte der Spulen S₁ bis S₃ in geeigneter Weise miteinander. Ergänzend werden die Phasenstränge der Stromversorgungsanschlüsse mit den anderen Anschlusskontakten der Spulen S₁ bis S₃ (Fig. 6b) oder mit den Eckpunkten des gebildeten Dreiecks gemäß dem Ersatzschaltbild nach Fig. 6a im Bereich der elektrischen Brücken 14 verbunden.

Im Deckel 6 ist sowohl die Kontaktierungsanordnung für die Dreiecksschaltung als auch die Kontaktierungsanordnung für die Sternschaltung fest verlegt und mit der Deckelunterseite verbunden. Beim Aufsetzen des Deckels 6 ist die jeweilige Kontaktierungsanordnung über elektrische Steckkontakte mit den entsprechenden Steckanschlüssen im Gehäuse 5 verbindbar. Alternativ können federbelastete Flächenkontaktierungen vorgesehen sein, die die elektrische Kontaktierung im aufgesetzten Zustand des Deckels gewährleisten.

Um zum einen ein definiertes Aufsetzen des Deckels 6 in einer eine Leistungsfunktion, nämlich Sternschaltung oder Dreieckschaltung, des Drehstrommotors 1 verwirklichenden Ausrichtung zu gewährleisten, sind mechanische Steckprofilierungen im Bereich des Gehäuses 5 einerseits und im Bereich des Deckels 6 andererseits vorgesehen. Diese gewährleisten ein positionsgesichertes, klemmendes Aufsetzen des Deckels 6. In diesen können die elektrischen Steckkontakte intergriert sein.

Zudem sind Signalisierungsmittel 8, 9, 13 vorgesehen, die eine Aussparung 8 im Deckel 6 sowie zwei auf gegenüberliegenden Seiten im Gehäuse 5 angeordnete Symbole 9 für Dreieckschaltung und Sternschaltung umfassen. Die Symbole 9 sind derart fluchtend zu der Aussparung 8 des Deckels 6 vorgesehen, dass beim Aufsetzen des Deckels 6 ein Blick durch die als Durchtritt gestaltete Aussparung 8 hindurch das Erkennen von jeweils einem der beiden Symbole 9 ermöglicht. Die Symbole 9 sind derart gewählt, dass bei Erkennen des Dreiecksymbols die Kontaktierungsanordnung in Dreieckschaltung zur Wirkung kommt, und bei Erkennen des die Sternschaltung definierenden Symbols durch die Aussparung 8 hindurch die für die Sternschaltung vorgesehene Kontaktierungsanordnung im Deckel 6 wirksam wird. Im Deckel 6 ist gegenüberliegend zu der Aussparung 8 eine kreisförmige Vertiefung 13 vorgesehen, die zur Oberseite des Deckels 6 hin geschlossen ist. Die beiden Symbole 9 sind als erhabene Nocken gestaltet, die in ihrer Kreisform auf die Kreisform der Aussparung 8 und der Vertiefung 13 abgestimmt sind. Beim Aufsetzen des Deckels 6 tauchen beide Nocken - je nach Ausrichtung des Deckels 6 - entweder in die Aussparung 8 oder in die Vertiefung 13 ein. Ein Betrachter kann demzufolge bei aufgesetztem Deckel 6 von oben her erkennen, in welcher Leistungsfunktion im Motoranschlusskasten 3 der Drehstrommotor angeschlossen ist, nämlich entweder in Sternschaltung oder in Dreieckschaltung. Die Kontaktierungsanordnungen 12 im Deckel 6 wie auch die mit den Motoranschlusskontakten und den Stromversorgungsanschlüssen versehenen Steckaufnahmen 11 im Gehäuse 5 sind derart gestaltet, dass beim Aufsetzen des Deckels 6 eine elektrische Steckverbindung zwischen den Kontaktierungsanordnungen und den entsprechenden elektrischen Anschlüssen im Gehäuse 5 erfolgt.

Das Gehäuse 5 wird über in den Ecken des Gehäuses vorgesehene Schraubverbindungen mit der Adapterplatte 4 verschraubt, die zuvor bereits auf dem Gehäuseflansch 2 des Motorgehäuses befestigt worden war. Benachbart zu entsprechenden Aufnahmen im Gehäuse 5 für diese Schraubverbindungen sind weitere Befestigungsaufnahmen vorgesehen, in die Befestigungsschrauben des Deckels eindringen können, um den Deckel 6 lösbar auf dem Gehäuse zu fixieren. Diese Befestigungsschrauben werden durch entsprechende Bohrungen im Deckel 6 von oben her hindurchgeführt und in die Befestigungsaufnahmen eingeschraubt.

## Patentansprüche

1. Motoranschlusskasten für einen Drehstrommotor mit einem Gehäuse, in dem elektrische Motoranschlusskontakte sowie mit einer Stromversorgungsquelle verbindbare Stromversorgungsanschlüsse vorgesehen sind, sowie mit elektrischen Kontaktierungsmitteln, um die Stromversorgungsanschlüsse mit den elektrischen Motoranschlusskontakten nach vorgegebenen Leistungsfunktionen zu verbinden, und mit einem auf das Gehäuse aufsetzbaren Deckel, **dadurch gekennzeichnet, dass** der Deckel (6) in unterschiedlichen Ausrichtungen auf das Gehäuse (5) aufsetzbar ist, und dass in dem Deckel (6) die elektrischen Kontaktierungsmittel in wenigstens zwei festgelegten Kontaktierungsanordnungen (12) für wenigstens zwei unterschiedliche Leistungsfunktionen vorgesehen sind, die unterschiedlichen Ausrichtungen des Deckels (6) derart alternativ zugeordnet sind, dass durch Aufsetzen des Deckels (6) jeweils eine der Leistungsfunktionen geschaltet ist.

2. Motoranschlusskasten nach Anspruch 1, **dadurch gekennzeichnet, dass** dem Deckel (6) und/oder dem Gehäuse (5) optisch, haptisch oder akustisch erfassbare Signalisierungsmittel zugeordnet sind, die abhängig von der gewählten Ausrichtung des Deckels nach dem Aufsetzen des Deckels die geschaltete Leistungsfunktion erkennen lassen.

3. Motoranschlusskasten nach Anspruch 1 oder 2, **dadurch gekennzeichnet, dass** am Deckel (6) und am Gehäuse (5) mechanische Kodierungsmittel vorgesehen sind, um ein definiertes Aufsetzen des Deckels (6) auf das Gehäuse (5) abhängig von der geschalteten Leistungsfunktion zu ermöglichen.

4. Motoranschlusskasten nach Anspruch 1, 2 oder 3, **dadurch gekennzeichnet, dass** die Leistungsfunktionen eine Sternschaltung und eine Dreieckschaltung umfassen.

5. Motoranschlusskasten nach wenigstens einem der vorhergehenden Ansprüche, **dadurch gekennzeichnet, dass** in dem Deckel (6) weitere elektrische oder elektronische Funktionselemente vorgesehen sind, die jeweils einer der Leistungsfunktionen zugeordnet sind.

6. Motoranschlusskasten nach wenigstens einem der vorhergehenden Ansprüche, **dadurch gekennzeichnet, dass** der Deckel ein-oder mehrteilig ausgeführt ist.

7. Motoranschlusskasten nach Anspruch 1, **dadurch gekennzeichnet, dass** der Deckel (6) lösbar oder unlösbar auf dem Gehäuse (5) montierbar ist.

8. Motoranschlusskasten nach Anspruch 6, **dadurch gekennzeichnet, dass** der Deckel aus mehreren, übereinander angeordneten und fest miteinander verbindbaren Deckellagen aufgebaut ist, die unterschiedliche Kontaktierungsanordnungen und/oder elektrische oder elektronische Funktionselemente aufweisen.

9. Drehstrommotor mit einem Motoranschlusskasten nach wenigstens einem der vorhergehenden Ansprüche.

10. Drehstrommotor nach Anspruch 9, **dadurch gekennzeichnet, dass** der Motoranschlusskasten (3) mittels einer Adapterplatte (4) auf einem Motorgehäuse (1, 2) befestigt ist.

11. Drehstrommotor nach Anspruch 9, **dadurch gekennzeichnet, dass** der Drehstrommotor als Asynchronmotor ausgeführt ist.

## Claims

1. A motor power connection box for a three-phase motor, which connection box comprises a housing, in which electrical motor connecting contacts and power supply connectors that can be connected to a power source are provided, and comprises electrical contacting means for the purpose of connecting said power supply connectors to said electrical motor connecting contacts according to predetermined performance functions, and comprises a cover that can be fitted to said housing, **characterized in that** said cover (6) can be fitted on said housing (5) in different orientations, and in said cover (6) the electrical contacting means are provided in at least two fixed contacting configurations (12) for at least two different performance functions, the different orientations of the cover (6) being alternatively assigned such that by fitting said cover (6) a respective one of the performance functions is selected.

2. The motor power connection box according to claim 1, **characterized in that** said cover (6) and/or said housing (5) are assigned optically, haptically or acoustically detectable indicating means, which are adapted to indicate the selected performance function depending on the chosen orientation of the cover after fitting of the cover.

3. The motor power connection box according to claim 1 or claim 2, **characterized in that** mechanical coding means are provided on said cover (6) and on said housing (5) to make it possible to fit said cover (6) to said housing (5) in a defined manner depending on the selected performance function.

4. The motor power connection box according to claim 1, claim 2, or claim 3, **characterized in that** the performance functions involve a Y connection and a delta connection.

5. The motor power connection box according to at least one of the preceding claims, **characterized in that** further electrical or electronic functional elements are provided in said cover (6), each of which is assigned to one of said performance functions.

6. The motor power connection box according to at least one of the preceding claims, **characterized in that** said cover is configured in one or more parts.

7. The motor power connection box according to claim 1, **characterized in that** said cover (6) is capable of being removably or irremovably mounted on said housing (5).

8. The motor power connection box according to claim 6, **characterized in that** said cover is composed of a plurality of superposed cover layers which are capable of being permanently joined together and which comprise different contacting configurations and/or electrical or electronic functional elements.

9. A three-phase motor comprising a motor power connection box according to at least one of the preceding claims.

10. The three-phase motor according to claim 9, **characterized in that** said motor power connection box (3) is attached to a motor housing (1, 2) by way of an adapter plate (4).

11. The three-phase motor according to claim 9, **characterized in that** said three-phase motor is an asynchronous motor.

## Revendications

1. Carter de raccordement de moteur pour un moteur triphasé comprenant un boîtier dans lequel sont prévus des contacts électriques de raccordement de moteur ainsi que des raccords d'alimentation électrique pouvant être connectés à une source d'alimentation électrique, et comprenant des moyens de contact électriques afin de relier les raccords d'alimentation électrique aux contacts électriques de raccordement de moteur conformément à des fonctions de puissance prédéfinies, et comprenant un couvercle pouvant être posé sur le boîtier, **caractérisé en ce que** le couvercle (6) peut être posé dans différentes orientations sur le boîtier (5), et **en ce que** les moyens de contact électriques sont prévus dans le couvercle (6) dans au moins deux agencements de mise en contact fixes (12) pour au moins deux fonctions de puissance différentes, qui sont associées de manière alternative à différentes orientations du couvercle (6) de telle sorte que l'une des fonctions de puissance soit à chaque fois commutée en posant le couvercle (6).

2. Carter de raccordement de moteur selon la revendication 1, **caractérisé en ce que** des moyens de signalisation pouvant être détectés de manière optique, haptique ou acoustique sont associés au couvercle (6) et/ou au boîtier (5), lesquels permettent de reconnaître la fonction de puissance commutée en fonction de l'orientation sélectionnée du couvercle après la pose du couvercle.

3. Carter de raccordement de moteur selon la revendication 1 ou 2, **caractérisé en ce que** des moyens de codage mécaniques sont prévus sur le couvercle (6) et sur le boîtier (5), afin de permettre une pose définie du couvercle (6) sur le boîtier (5) conformément à la fonction de puissance commutée.

4. Carter de raccordement de moteur selon la revendication 1, 2 ou 3, **caractérisé en ce que** les fonctions de puissance comprennent un circuit en étoile et un circuit en triangle.

5. Carter de raccordement de moteur selon au moins l'une quelconque des revendications précédentes, **caractérisé en ce que** d'autres éléments fonctionnels électriques ou électroniques sont prévus dans le couvercle (6), lesquels sont associés à chaque fois à l'une des fonctions de puissance.

6. Carter de raccordement de moteur selon au moins l'une quelconque des revendications précédentes, **caractérisé en ce que** le couvercle est réalisé en une ou plusieurs pièces.

7. Carter de raccordement de moteur selon la revendication 1, **caractérisé en ce que** le couvercle (6) peut être monté de manière détachable ou non détachable sur le boîtier (5).

8. Carter de raccordement de moteur selon la revendication 6, **caractérisé en ce que** le couvercle est constitué de plusieurs couches de couvercle disposées les unes sur les autres et pouvant être connectées fixement les unes aux autres, lesquelles présentent différents agencements de contact et/ou différents éléments fonctionnels électriques ou électroniques.

9. Moteur triphasé comprenant un carter de raccordement de moteur selon au moins l'une quelconque des revendications précédentes.

10. Moteur triphasé selon la revendication 9, **caractérisé en ce que** le carter de raccordement de moteur (3) est fixé sur un boîtier de moteur (1, 2) au moyen d'une plaque d'adaptateur (4).

11. Moteur triphasé selon la revendication 9, **caractérisé en ce que** le moteur triphasé est réalisé sous forme de moteur asynchrone.
